# EUROPÄISCHE PATENTSCHRIFT

(11) **EP 2 310 166 B1**
(45) Veröffentlichungstag und Bekanntmachung des Hinweises auf die Patenterteilung: **27.03.2013**
(21) Anmeldenummer: 09775574.8
(22) Anmeldetag: 24.07.2009
(51) Int. Cl.: B23Q 3/157, B23Q 39/02

(54) **WERKZEUGMASCHINE**
MACHINE TOOL
MACHINE-OUTIL

(30) Priorität: 30.07.2008 AT 41308 U
(43) Veröffentlichungstag der Anmeldung: 20.04.2011
(73) Patentinhaber: Anger Machining GmbH, 4050 Traun (AT)
(72) Erfinder: HAAS, Roland, A-4222 St. Georgen/Gusen (AT); DIRNBERGER, Klaus, A-4470 Enns (AT)
(74) Vertreter: Jell, Friedrich
(86) Internationale Anmeldenummer: PCT/AT2009/000288
(87) Internationale Veröffentlichungsnummer: WO 2010/012017

(56) Entgegenhaltungen:
- WO-A-93/05926
- WO-A-97/10932
- CH-A5- 685 609
- US-A1- 2004 029 691

## Beschreibung

Die Erfindung betrifft mit einer Vielzahl feststehender, gegebenenfalls aus einer zurückgezogenen Ruhelage in eine ausgefahrene Arbeitslage verlagerbarer und in einem rahmenförmigen Gestell mit einem innen offenen Rahmen an verschiedenen Lagen positionierter Werkzeugspindeln für je ein Werkzeug und mit einem Werkstückträger, der mindestens eine Werkstückaufnahme für ein Werkstück aufweist.

Mit derartigen bekannten Werkzeugmaschinen (WO 97/10932 A) wird das zu bearbeitende Werkstück an der Werkstückaufnahme des Werkstückträgers festgelegt und mit dem Werkstückträger nacheinander einzelnen Bearbeitungswerkzeugen, beispielsweise Bohrern, Fräsern, Schleifern od. dgl., zugeführt. Die Bearbeitungswerkzeuge sind dabei an ortsfest am Rahmen des Gestells befestigten Spindeln angeordnet, wobei die Spindeln wahlweise zwischen einer ausgefahrenen Arbeitslage und einer zurückgezogenen Ruhelage verlagerbar sein können, um gegenseitige Behinderungen der Spindeln bei der Bearbeitung durch gerade in Ruhestellung befindliche Spindeln zu vermeiden. Diese bekannten Werkzeugmaschinen zeichnen sich vor allem durch ihren wirtschaftlichen Betrieb aus, der sich insbesondere dadurch ergibt, dass keine Werkzeugwechselzeiten und keine Leerlaufzeiten während eines Bearbeitungsvorganges abgewartet werden müssen, da die Werkzeugmaschine die erforderlichen Werkzeuge in den verschiedenen Spindeln aufnimmt und die Werkzeuge zwischen einzelnen Bearbeitungsvorgängen somit nicht gewechselt werden müssen und bereits vor dem Positionieren des Werkstücks von einer Spindel zu einer anderen hochgefahren werden können. Durch diese Maßnahme werden die Nebenzeiten minimiert und ist eine zügige Bearbeitung der Werkstücke möglich. Zudem ist auf derartigen Vorrichtungen eine mehrspindelige Parallelbearbeitung mehrerer Werkstücke möglich.

Das Werkstück ist mit dem Werkstückträger auf einem Schlitten üblicherweise dreiachsig translatorisch bewegbar und zudem um wenigstens eine Rotationsachse drehbar, um das Werkstück in gewünschter Weise bezüglich der einzelnen, feststehenden Bearbeitungswerkzeuge führen und auch komplexe Bahnen fräsen bzw. bohren oder schleifen zu können. Als Nachteil ist diesen bekannten Werkzeugmaschinen insbesondere zueigen, dass für den Fall, dass eine größere Anzahl an Bearbeitungswerkzeugen vorzusehen ist, eine entsprechend hohe Anzahl an Werkzeugspindeln erforderlich ist, die zusätzlich am Rahmen anzuordnen sind, wodurch gegebenenfalls, insbesondere bei besonders komplexen Bearbeitungen, auf größere Rahmengrößen zurückgegriffen werden muss, was die Werkzeugmaschine naturgemäß verteuert.

Um mit derartigen bekannten Werkzeugmaschinen beispielsweise auch zwei Werkstücke gleichzeitig bearbeiten zu können, ist es bekannt (DE 10204050199 A1), einen Arbeitsraum vorzusehen, in dem wenigstens zwei Werkstückträger angeordnet sind. Beide Werkstückträger sind dabei mit Verfahrenseinrichtungen verbunden, sodass sie in dem Arbeitsraum zumindest zweidimensional bewegt werden können. Diese Verfahrenseinrichtungen legen Verfahrensbereiche fest, die in dem Arbeitsraum liegen und voneinander getrennt festlegbar sind. Damit können verschiedene Bearbeitungsvorgänge wie beispielsweise Schleifen, Hohnen, Büchsen Einpressen od. dgl. gleichermaßen in einer Maschine vorgenommen werden. Von Nachteil ist hierbei wiederum der erhöhte Werkzeugmaschinenaufwand für den Fall, dass eine erhebliche Anzahl an Bearbeitungswerkzeugen vorzusehen ist.

Herkömmliche Bearbeitungszentren, allerdings ohne ein rahmenförmiges Gestell, welches mit zwei feststehenden gegebenenfalls aus einer zurückgezogenen Ruhelage in eine ausgefahrene Arbeitslage verlagerbaren Werkzeugspindeln ausgestattet sind, sind beispielsweise aus der WO 93/05926 A1 und der CH 685 609 A5 bekannt. Diese Druckschriften offenbaren beispielsweise herkömmliche Fräsmaschine mit Werkzeugwechslern.

Ausgehend von einem Stand der Technik der eingangs geschilderten Art liegt der Erfindung die Aufgabe zugrunde eine Werkzeugmaschine zu schaffen, die bei möglichst kurzen Bearbeitungszeiten, also minimierten Nebenzeiten, eine Bearbeitung eines Werkstückes mit einer erhöhten Anzahl an Werkzeugen erlaubt, ohne auf komplexere Arbeitsstationen zurückgreifen zu müssen.

Die Erfindung löst diese Aufgabe dadurch, dass der durch die Rahmenöffnung des innen offenen Rahmens ragende Werkstückträger wenigstens mehrachsig translatorisch und vorzugsweise auch rotierend in der Rahmenebene des Gestells und senkrecht dazu bewegbar ist, um das Werkstück der Werkstückaufnahme zum jeweiligen Werkzeug zu verlagern, dass wenigstens einer der Werkzeugspindeln ein Werkzeugmagazin samt Werkzeugwechsler zugeordnet ist, dass das Werkzeugmagazin eine samt Drehantrieb neben der Werkzeugspindel am Gestell befestigte Revolvertrommel oder ein Kettenmagazin ist und dass das Werkzeugmagazin samt Werkzeugwechsler und zugeordneter Werkzeugspindel im Seitenbereich, also im Anschlussbereich zweier Schenkel, des rahmenförmigen Gestells angeordnet sind.

Mit dieser einfachen sowie eleganten Maßnahme besteht die Möglichkeit, auf Werkzeugmaschinen mit einer Mehrzahl an feststehenden Werkzeugspindeln Bearbeitungen mit einer erhöhten Anzahl an Werkzeugen durchzuführen, ohne die Spindelanzahl erhöhen zu müssen. Das Werkstück wird mit dem Werkstückträger von Bearbeitungswerkzeug zu Bearbeitungswerkzeug verlagert, wobei das jeweilige Werkzeug bereits während des Anfahrens des Werkstückträgers mit dem Werkstück gegebenenfalls in seine Arbeitslage verlagert werden kann und hochfährt und somit unmittelbar einsatzfähig ist. Mit der Erfindung besteht die Möglichkeit, beispielsweise einen Bearbeitungsschritt mit der dem Werkzeugmagazin samt Werkzeugwechsel zugeordneten Werkzeugspindel durchzuführen, anschließend zu einer anderen feststehenden Werkzeugspindel zu wechseln und einen weiteren Bearbeitungsschritt durchzuführen, während der Werkzeugwechsler die entsprechenden Werkzeuge zwischen Werkzeugmagazin und Werkzeugspindeln wechselt. Bereits im nächsten Arbeitsschritt kann der Werkstückträger mit dem Werkstück wiederum die Werkzeugspindel anfahren, der das Werkzeugmagazin und der Werkzeugwechsler zugeordnet sind. Somit kann bei einer verringerten Spindelanzahl eine erhöhte Anzahl an Werkzeugen verwendet werden, ohne die Nebenzeiten der Werkzeugmaschine zu erhöhen.

Um den Bauaufwand der Werkzeugmaschine dabei nicht wesentlich zu erhöhen, ist als Werkzeugmagazin eine samt Drehantrieb neben der Werkzeugspindel am Gestell befestigte Revolvertrommel oder ein Kettenmagazin vorgesehen. Revolvertrommeln bauen üblicherweise klein und können somit bei geringem Platzbedarf eine entsprechende Anzahl an Werkzeugen aufnehmen, ohne übermäßig Raum in Anspruch zu nehmen. Kettenmagazine können in üblicher Weise bei kompakter Bauweise eine Mehrzahl an Werkzeugen aufnehmen und ermöglichen gegebenenfalls ein Bestücken des Werkzeugmagazins von außerhalb der Werkzeugmaschine.

Um die Anzahl der mit einer herkömmlichen Werkzeugmaschine möglichen Werkzeugspindeln beim Vorsehen einer erfindungsgemäßen Werkzeugspindel samt Werkzeugmagazin und Werkzeugwechsler nicht einschränken zu müssen, ist das Werkzeugmagazin samt Werkzeugwechsler und zugeordneter Werkzeugspindel im Seitenbereich, also im Anschlussbereich zweier Schenkel, des rahmenförmigen Gestells angeordnet. In diesem Fall würde die Werkzeugspindel an gegenüber dem Stand der Technik unveränderter Lage angeordnet sein können und würde der Werkzeugwechsler samt Magazin in einen Bereich des seitlichen Anschlussschenkels des Rahmens vorragen, der üblicherweise nicht von Werkzeugen genutzt wird.

Zur Vereinfachung der Übergabe von Werkzeugen zwischen Werkzeugmagazin und Revolvertrommel empfiehlt es sich, wenn der Werkzeugwechsler samt Wechslerantrieb zwischen dem Werkzeugmagazin und der Werkzeugspindel am Gestell befestigt ist. Damit ergibt sich eine besonders kompakte Baueinheit für den Werkzeugwechsler für die erfindungsgemäße Werkzeugmaschine, der gegebenenfalls auch problemlos auf bestehenden Werkzeugmaschinen nachgerüstet werden kann, ohne unnötig hohe Stillstandszeiten der Werkzeugmaschine zu verursachen.

Zur Gewährleistung, dass das Werkzeugmagazin selbst bzw. die in das Werkzeugmagazin eingesetzten Werkzeuge den Bearbeitungsvorgang der Werkstücke in der Werkzeugmaschine nicht behindern, empfiehlt es sich, wenn die Werkzeuge im Werkzeugmagazin mit parallel zur Trommelrevolverachse eines Trommelmagazins bzw. zu einer Kettenradachse eines Kettenmagazins ausgerichteter Drehachse in entsprechenden Werkzeugaufnahmen aufmagaziniert sind und dass die Werkzeugaufnahmen aus dieser Lagerstellung in eine Übergabestellung mit zur zugehörenden Werkzeugspindel paralleler Achse verlagerbar sind. Somit ist bei einfacher Bauweise sichergestellt, dass die Werkzeuge in ihrer Magazinstellung nicht in den Arbeitsbereich der Werkzeugmaschine vorragen, besteht aber dennoch nach einem Ausschwenken der jeweiligen Werkzeugaufnahmen aus der Lagerstellung in eine Übergangsstellung mit zur zugehörigen Werkzeugspindel paralleler Achse, also im Wesentlichen in Richtung des Bearbeitungsraumes vor, eine einfache Möglichkeit eines Werkzeugwechsels.

Aus dieser Lage kann ein Werkzeugwechsel insbesondere mit einem Werkzeugwechsler vorteilhaft vorgenommen werden, der einen zweiarmigen Hebel umfasst, der einseitig Greifer für Werkzeuge aufweist und der zum Werkzeugwechsel in Richtung einer zur zugeordneten Werkzeugspindel parallelen Achse verlagerbar und um diese Achse drehbar ist. Dieser zweiarmige Hebel greift mit einem Greifer beispielsweise das in die Werkzeugspindel eingesetzte Werkzeug und mit dem anderen Hebel zugeordneten Greifer gleichzeitig das in die Werkzeugaufnahme des Werkzeugmagazins eingesetzte Werkzeug. Nach einem Lösen der Werkzeuge aus der Werkstückaufnahme wird der zweiarmige Hebel in Richtung der zur Spindelachse parallelen Achse verschoben, der zweiarmige Hebel anschließend beispielsweise um 180° gedreht, und das auszuwechselnde Werkzeug gleichzeitig mit dem ausgewechselten Werkzeug in die Werkzeugspindel bzw. in die Werkzeugaufnahme des Werkzeugmagazins eingesetzt. Wird der zweiarmige Hebel anschließend von den Werkzeugen gelöst und in eine aus dem Bearbeitungsraum der Werkzeugmaschine zurückgezogene Parkposition verschwenkt, ist eine problemlose Bearbeitung der Werkstücke ohne Behinderung möglich.

In der Zeichnung ist die Erfindung anhand eines Ausführungsbeispiels schematisch dargestellt. Es zeigen
- Fig. 1: eine erfindungsgemäße Werkzeugmaschine in Vorderansicht,

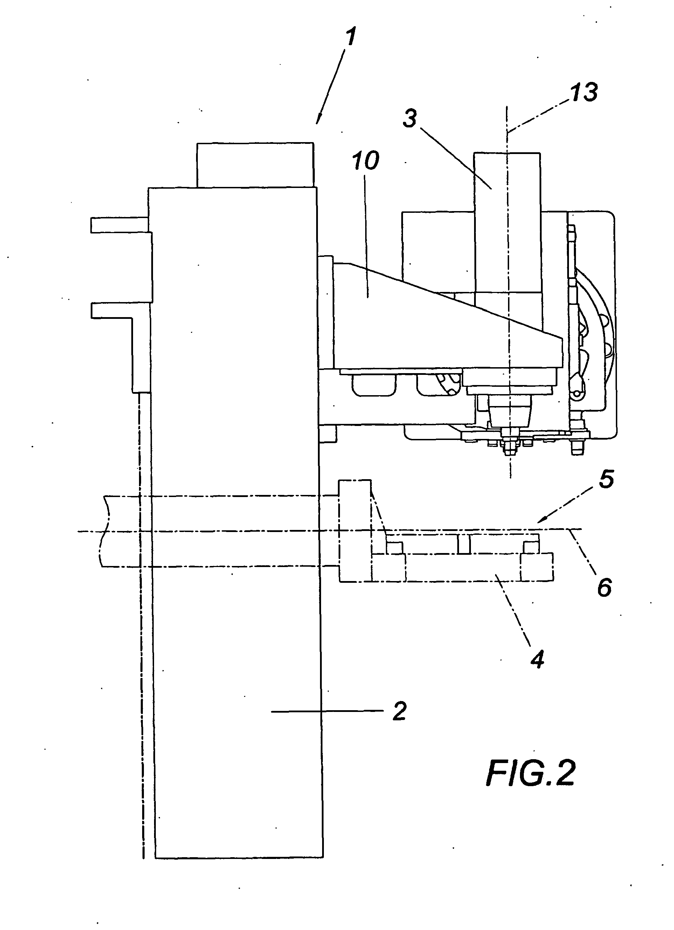

- Fig. 2: die Werkzeugmaschine aus Fig. 1 in Seitenansicht,

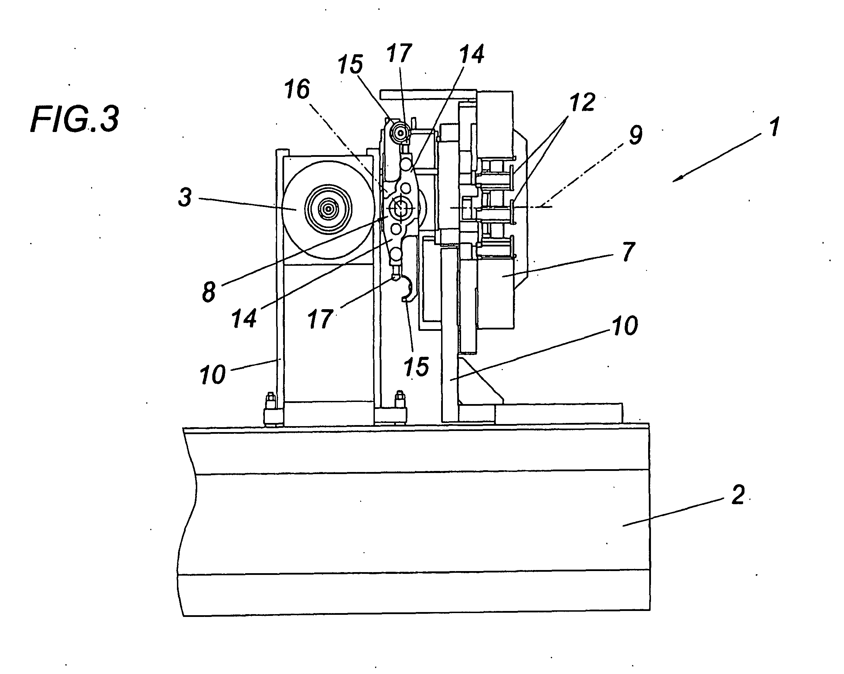

- Fig. 3: eine Unteransicht auf die Werkzeugmaschine aus Fig. 1 und 2 im Bereich der Spindel mit zugeordnetem Werkzeugmagazin und
- Fig. 4: die Anordnung aus Fig. 3 in teilgeschnittener Schrägansicht.

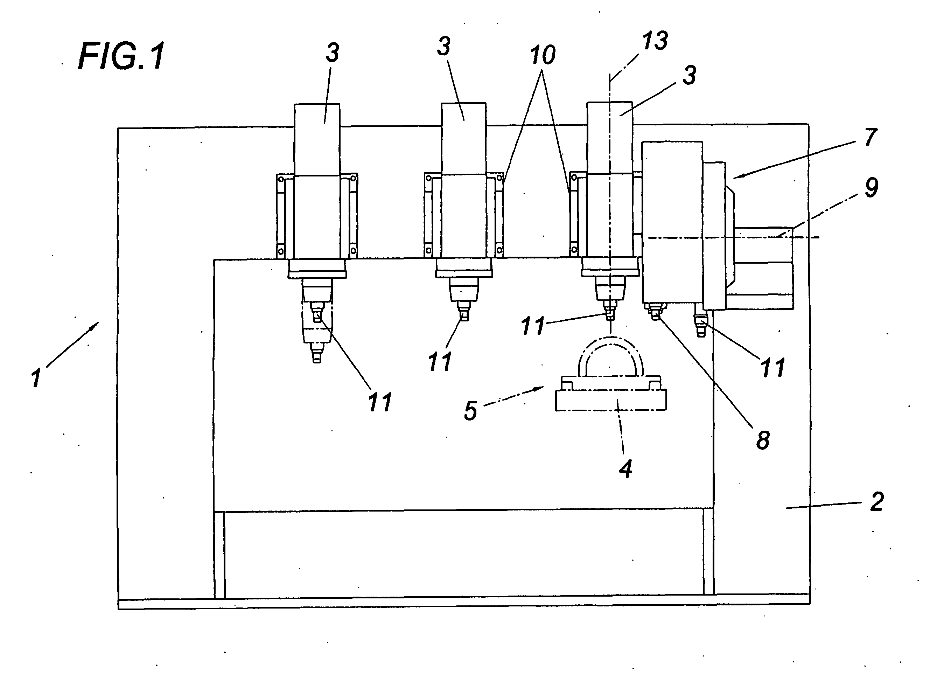

Eine erfindungsgemäße Werkzeugmaschine 1 umfasst eine Vielzahl an in einem rahmenförmigen Gestell 2 feststehend angeordneten und in verschiedenen Lagen positionierten Werkzeugspindeln 3. In Fig. 1 ist strichpunktiert angedeutet, dass die einzelnen Werkzeugspindeln zwischen einer zurückgezogenen Ruhelage und einer ausgefahrenen Arbeitslage verlagerbar sein können, um Behinderungen bei der Bearbeitung von Werkstücken durch andere Werkzeuge zu vermeiden. Des Weiteren gehört der Werkzeugmaschine 1 ein Werkstückträger 4 zu, der eine Werkstückaufnahme 5 aufweist. Dieser Werkstückträger 4 ist im dargestellten Ausführungsbeispiel dreiachsig translatorisch bewegbar, also in der Rahmenebene des Gestells 2, senkrecht zu dieser Rahmenebene und ist zudem um eine Achse 6 drehbar ausgebildet. Aus dem Stand der Technik ist es zusätzlich auch bekannt, Werkstückaufnahmen 5 vorzusehen, die gegenüber dem Werkstückträger 4 drehbar sind.

Gemäß der Erfindung ist es vorgesehen, dass wenigstens einer der Werkzeugspindeln 3 ein Werkzeugmagazin 7 samt Werkzeugwechsler 8 und zugeordnetem Drehantrieb für das Werkzeugmagazin 7 zugeordnet ist.

Das Werkzeugmagazin 7 ist samt einem nicht näher dargestellten Drehantrieb neben der zugeordneten Werkzeugspindel 3 am Gestell 2 befestigte Revolvertrommel, die um die Achse 9 drehbar gelagert ist. Im dargestellten Ausführungsbeispiel sind alle Werkzeugspindeln 3, wie auch das Werkzeugmagazin 7 und der Werkzeugwechsler 8 über entsprechende Konsolen bzw. Zwischenstücke 10 am Gestell befestigt, insbesondere verschraubt.

Der Werkzeugwechsler 7 samt Werkzeugwechslerantrieb ist zwischen dem Werkzeugmagazin 8 und der Werkzeugspindel 3 am Gestell befestigt. Im Ausführungsbeispiel sind die Werkzeuge 11 im Werkzeugmagazin 7 mit parallel zur Revolvertrommelachse 9 ausgerichteter Drehachse in entsprechende Werkzeugaufnahmen 12 aufmagaziniert, wobei die Werkzeugaufnahmen 12 aus dieser Lagerstellung in eine Übergabestellung mit zur zugehörenden Werkzeugspindel 3 paralleler Achse 13 verlagerbar sind (siehe Fig. 1).

Der Werkzeugwechsler 8 umfasst einen zweiarmigen Hebel 14, der endseitig Greifer 15 für Werkzeuge 11 aufweist und der zum Werkzeugwechsel in Richtung einer zur zugehörenden Werkzeugspindel 3 parallelen Achse 16 verlagerbar und um diese Achse 16 auch drehbar ist. Den Greifern sind zudem Werkzeuglöseeinrichtungen 17 zugeordnet, mit denen das, beispielsweise über einen Klemmsitz in die jeweilige Werkzeugspindel 3 bzw. die Werkzeugaufnahme 12 eingesetzte, Werkzeug aus seiner Verankerung gelöst werden kann. Zum Werkzeugwechsel wird die erforderliche Revolvertrommel samt Werkzeug ausgewählt, mit dem Drehantrieb der Revolvertrommel in eine Übergabelage verfahren, die Werkzeugaufnahme 12 aus der Lagerstellung in eine Übergabestellung verschwenkt, anschließend mit dem Greifer 15 gegriffen, aus der jeweiligen Aufnahme gelöst, in Richtung der Achse 16 aus der Aufnahme entnommen, anschließend der Greifer um 180° um die Achse 16 verschwenkt und werden die Werkzeuge wiederum in die zugeordnete Werkzeugspindel 3 bzw. in die zugeordnete Werkzeugaufnahme 12 eingesetzt. Anschließend muss lediglich die Werkzeugaufnahme 12 aus dem Bearbeitungsbereich verschwenkt werden, wonach die zugeordnete Werkzeugspindel 3 wiederum einsatzfähig ist.

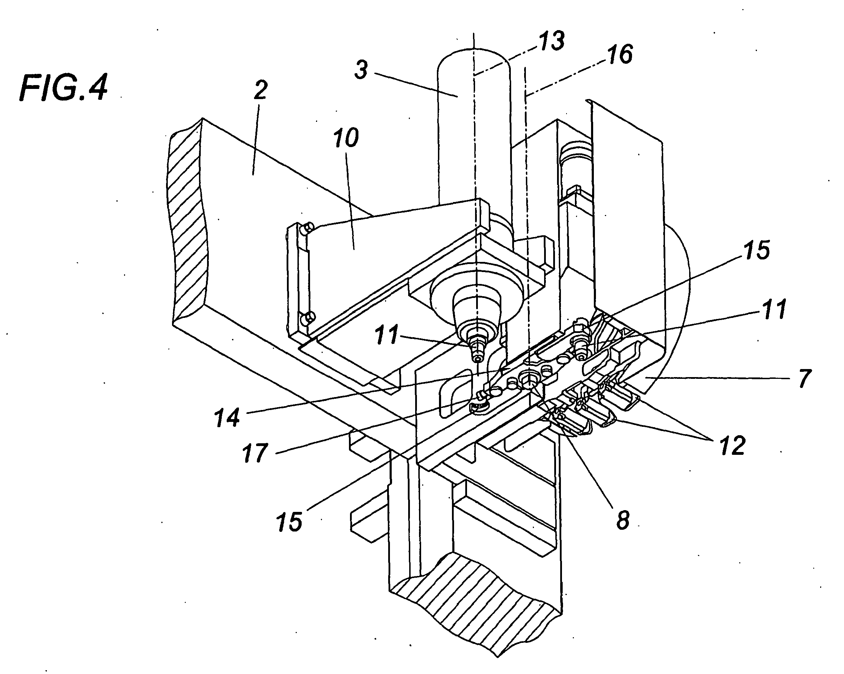

Insbesondere den Fig. 1 und 4 kann entnommen werden, dass das Werkzeugmagazin 7 samt Werkzeugwechsler 8 und der zugehörigen Werkzeugspindel 3 besonders vorzugsweise im Seitenbereich, also im Anschlussbereich zweier Schenkel des rahmenförmigen Gestells 2, angeordnet ist, womit einerseits bestehende Werkzeugmaschinen problemlos erweitert werden können und zudem der Einsatz auch nahe beieinander liegender Werkzeugspindeln 3 nicht beeinträchtigt wird.

## Patentansprüche

1. Werkzeugmaschine (1) mit einer Vielzahl feststehender, gegebenenfalls aus einer zurückgezogenen Ruhelage in eine ausgefahrene Arbeitslage verlagerbarer und in einem rahmenförmigen Gestell (2) mit einem innen offenen Rahmen an verschiedenen Lagen positionierter Werkzeugspindeln (3) für je ein Werkzeug (11) und mit einem Werkstückträger (4), der mindestens eine Werkstückaufnahme (5) für ein Werkstück aufweist, **dadurch gekennzeichnet, dass** der durch die Rahmenöffnung des innen offenen Rahmens ragende Werkstückträger (4) wenigstens mehrachsig translatorisch und vorzugsweise auch rotierend in der Rahmenebene des Gestells (2) und senkrecht dazu bewegbar ist, um das Werkstück der Werkstückaufnahme (5) zum jeweiligen Werkzeug (11) zu verlagern, dass wenigstens einer der Werkzeugspindeln (3) ein Werkzeugmagazin (7) samt Werkzeugwechsler (8) zugeordnet ist, dass das Werkzeugmagazin (7) eine samt Drehantrieb neben der Werkzeugspindel (3) am Gestell (2) befestigte Revolvertrommel oder ein Kettenmagazin ist und dass das Werkzeugmagazin (7) samt Werkzeugwechsler (8) und zugeordneter Werkzeugspindel (3) im Seitenbereich, also im Anschlussbereich zweier Schenkel, des rahmenförmigen Gestells angeordnet ist.

2. Werkzeugmaschine nach Anspruch 1, **dadurch gekennzeichnet, dass** der Werkzeugwechsler (8) samt Wechslerantrieb zwischen dem Werkzeugmagazin (7) und der Werkzeugspindel (3) am Gestell befestigt ist.

3. Werkzeugmaschine nach Anspruch 1 oder 2, **dadurch gekennzeichnet, dass** die Werkzeuge (11) im Werkzeugmagazin (7) mit parallel zur Revolvertrommelachse (9) bzw. zu einer Kettenradachse ausgerichteter Drehachse in entsprechenden Werkzeugaufnahmen (12) aufmagaziniert sind und dass die Werkzeugaufnahmen (12) aus dieser Lagerstellung in eine Übergabestellung mit zur zugeordneten Werkzeugspindel (3) paralleler Achse (13) verlagerbar sind.

4. Werkzeugmaschine nach Anspruch 2 oder 3, **dadurch gekennzeichnet, dass** der Werkzeugwechsler (8) einen zweiarmigen Hebel (14) umfasst, der endseitig Greifer (15) für Werkzeuge aufweist und der zum Werkzeugwechsel in Richtung einer zur zugeordneten Werkzeugspindel (3) parallelen Achse (16) verlagerbar und um diese Achse (16) drehbar ist.

## Claims

1. A machine tool (1), comprising a plurality of fixed tool spindles (3) which can optionally be displaced from a retracted idle position to an extended working position and can be positioned at different positions in a frame-like rack (2) for one tool (11) each, and comprising a workpiece carrier (4) which has at least one workpiece holder (5) for a workpiece, **characterized in that** the workpiece carrier (4) which projects through the frame opening of the inwardly open frame can be moved at least multiaxially in a translational manner and preferably also in a rotational manner in the frame plane of the rack (2) and perpendicular thereto in order to move the workpiece of the workpiece holder (5) to the respective tool (11), that a tool magazine (7) together with tool changer (8) is associated with at least one of the tool spindles (3), that the tool magazine (7) is a revolver drum or a chain magazine fastened together with the rotary drive to the rack (2) adjacent to the tool spindle (3) and that the tool magazine (7) together with tool changer (8) and associated tool spindle (3) are arranged in the lateral region, i.e. in the connecting region of two legs, of the frame-like rack.

2. The machine tool according to claim 1, **characterized in that** the tool changer (8) together with changer drive is fastened to the rack between the tool magazine (7) and the tool spindle (3).

3. The machine tool according to claim 1 or 2, **characterized in that** the tools (11) in the tool magazine (7) are inserted in the respective tool holders (12) with a rotational axis which is aligned parallel to the revolver drum axis (9) or a chain wheel axis, and the tool holders (12) can be moved from this storage position to a transfer position with an axis (13) which is parallel to the associated tool spindle (3).

4. The machine tool according to claim 2 or 3, **characterized in that** the tool changer (8) comprises a two-arm lever (14) which comprises grippers (15) for tools at the end side and which can be moved for changing the tool in the direction of an axis (16) that is parallel to the associated tool spindle (3) and is rotatable about said axis (16).

## Revendications

1. Machine-outil (1) avec un châssis (2) fixe, le cas échéant déplaçable dans une position de travail depuis la position de pose reculée, en forme de cadre avec un cadre ouvert à l'intérieur et des broches porte-outils (3) positionnées à différents endroits pour chaque outil (11) et avec un porte-outil (4) qui présente au moins un système de fixation de pièces (5) pour une pièce à usiner marqué par le fait que le porte-outil (4) dépassant du cadre ouvert à travers l'ouverture peut se déplacer de manière translatoire, verticale et de préférence rotative également sur plusieurs axes dans le niveau du cadre du châssis (2) pour déposer la pièce à usiner placée sur le système de fixation de pièces (5) pour l'outil correspondant (11) de telle sorte qu'au moins une des broches porte-outil (3) soit attribuée à un chargeur d'outil (7) avec tous les changeurs d'outil (8), que le chargeur d'outil (7) soit un entraînement rotatif complet à côté de la broche porte-outil (3) fixée sur tambour ou un chargeur à la chaîne fixé sur le châssis (2) et que le chargeur d'outil (7) avec tous les changeurs d'outil (8) et la broche porte-outil (3) correspondante soit disposée dans la zone de conclusion des deux bras du châssis en forme de cadre.

2. Machine-outil conforme à la revendication 1 **caractérisée par le fait que** le changeur d'outil (8) avec tout le mécanisme de changement est fixé entre le chargeur d'outil (7) et la broche porte-outil (3) sur le châssis.

3. Machine-outil conforme aux revendications 1 ou 2 **caractérisée par le fait que** les outils (11) dans le chargeur d'outil (7) sont emmagasinés avec l'axe rotatif aligné parallèlement à l'axe du tambour (9) ou à l'axe de la roue à chaîne dans le système de fixation d'outil (12) correspondant et que les systèmes de fixation d'outil (12) peuvent être déplacés de cette position de stockage dans une position de distribution avec l'axe parallèle (13) à la broche porte-outil (3) attribuée.

4. Machine-outil conforme aux revendications 2 ou 3 **caractérisée par le fait que** le changeur d'outil (8) comprend un levier à deux bras (14), le préhenseur (15) côté extrémité pour les outils et que l'axe (16) parallèle au changeur d'outil peut se déplacer dans le sens de la broche porte-outil (3) correspondante et puisse tourner autour de cet axe (16).
